# EUROPEAN PATENT APPLICATION

(11) **EP 3 530 401 A1**
(43) Date of publication of application: **28.08.2019**
(21) Application number: 19153020.3
(22) Date of filing: 22.01.2019
(51) Int. Cl.: B23P 19/00, B23P 19/10, B25B 5/14

(54) **COMPONENT CARRIER**

(30) Priority: 22.02.2018 GB 201802847
(71) Applicant: Rolls-Royce Power Engineering PLC, Derby DE24 8BJ (GB)
(72) Inventor: Wilson, Paul, Derby, Derbyshire DE24 8BJ (GB); Giudice, Sebastiano, Derby, Derbyshire DE24 8BJ (GB)
(74) Representative: Rolls-Royce plc

(57) **Abstract**

A component carrier (10) for holding and positioning at least one component (11) of an industrial object, the carrier comprising: a mobile trolley (12); and a component support (13) on the trolley and configured to hold the component; wherein the component support is configured to be mobile relative to the trolley.

## Description

The present disclosure relates to a component carrier for holding and positioning at least one component of an industrial object. The present disclosure further relates to a method of performing a process on a component of an industrial object, and a method of assembling an industrial object.

Segments of industrial objects are required to be moved, for example within a factory. It is often necessary to align segments relative to each other during manufacture of industrial objects. It has previously been known to lift and move individual segments using cranes and air skids. A harness is manually attached to the part, which is then picked up using the crane and lifted onto a trolley. The trolley with the part loaded onto it is then moved to another location, for example so that a further process can be performed on the segment. The part is then unloaded from the trolley using another crane lift. These lifts and movements are undesirably manual and time consuming.

It may therefore be desirable to provide an improved component carrier for holding and positioning at least one component of an industrial object.

According to the present disclosure, there is provided a component carrier for holding and positioning at least one component of an industrial object. The carrier comprises a mobile trolley and a component support on the trolley. The component support is configured to hold the component. The component support is configured to be mobile relative to the trolley.

In an arrangement, the component support comprises a locking part. The locking part is configured to lock the component support relative to a corresponding component support of another component carrier, so as to fix components held by the component supports in position relative to each other.

In an arrangement, the component support comprises a fine movement positioner configured to position the component support to an accuracy of within 1mm relative to a corresponding component support of another component carrier, so as to position components held by the component supports relative to each other.

In an arrangement, the trolley comprises an interlocking part configured to interlock the trolley with a corresponding mobile trolley of another component carrier.

In an arrangement, the trolley comprises a coarse movement positioner configured to position the trolley relative to a corresponding mobile trolley of another component carrier.

In an arrangement, the carrier comprises at least one camera for monitoring the position of the component held by the component support relative to a corresponding component held by another component support. In an arrangement, the carrier comprises a camera array comprising a plurality of cameras for monitoring the position of the component held by the component support from a plurality of points of view. In an arrangement, each camera is fixed relative to the trolley.

In an arrangement, the component support is configured to move two-dimensionally across the trolley. In an arrangement, the component support is configured to rotate about a vertical axis. In an arrangement, the component support comprises a lifter configured to control the vertical position of the component. In an arrangement, the component support comprises a rotator configured to rotate the component about a horizontal axis. In an arrangement, the component support is configured to move off the trolley and onto a corresponding trolley of another component carrier.

In an arrangement, the trolley comprises wheels configured to run on complementary rails; or wheels and a complementary steering system.

In an arrangement, the trolley has a width of at least 2m. In an arrangement, the component support is configured to hold a component having a mass of at least 50t.

According to an aspect of the present disclosure, there is provided a component carrier system comprising a plurality of the component carriers. According to an aspect of the present disclosure, there is provided a factory comprising a plurality of the carriers.

According to an aspect of the present disclosure, there is provided a method of performing a process on a component of an industrial object, the method comprising: holding the component by a component support on a mobile trolley; coarsely positioning the component by controlling movement of the trolley; finely positioning the component by controlling movement of the component support relative to the trolley; and performing the process on the component.

According to an aspect of the present disclosure, there is provided a method of assembling an industrial object, the method comprising: holding a first component of the industrial object by a first component support on a first mobile trolley; holding a second component of the industrial object by a second component support on a second mobile trolley; coarsely positioning the components relative to each other by controlling movements of the trolleys; finely positioning the components relative to each other by controlling movements of the component supports relative to the trolleys; and assembling the components together.

According to an aspect of the present disclosure, there is provided a system for controlling positioning of at least one component of an industrial object, the system comprising: a computer system configured to output control signals to at least one of a coarse movement positioner and a fine movement positioner of a component carrier for holding and positioning the component; and a feedback system configured to output feedback signals to the computer system indicating the position of the component; wherein the computer system is configured to output the control signals taking into account the feedback signals.

The disclosure will now be further described by way of non-limiting examples, with reference to the accompanying figures, in which:
Figure 1 depicts a plan view of component carriers;
Figure 2 depicts a side view of the component carriers depicted in Figure 1;
Figure 3 depicts a front view of one of the component carriers depicted in Figure 1;
Figures 4-7 depict component carriers at respective stages during a method of assembling an industrial object;
Figure 8 depicts a component carrier on rails;
Figure 9 illustrates a method of performing a process on a component of an industrial object;
Figure 10 illustrates a method of assembling an industrial object; and
Figure 11 illustrates a computer system with a feedback system.

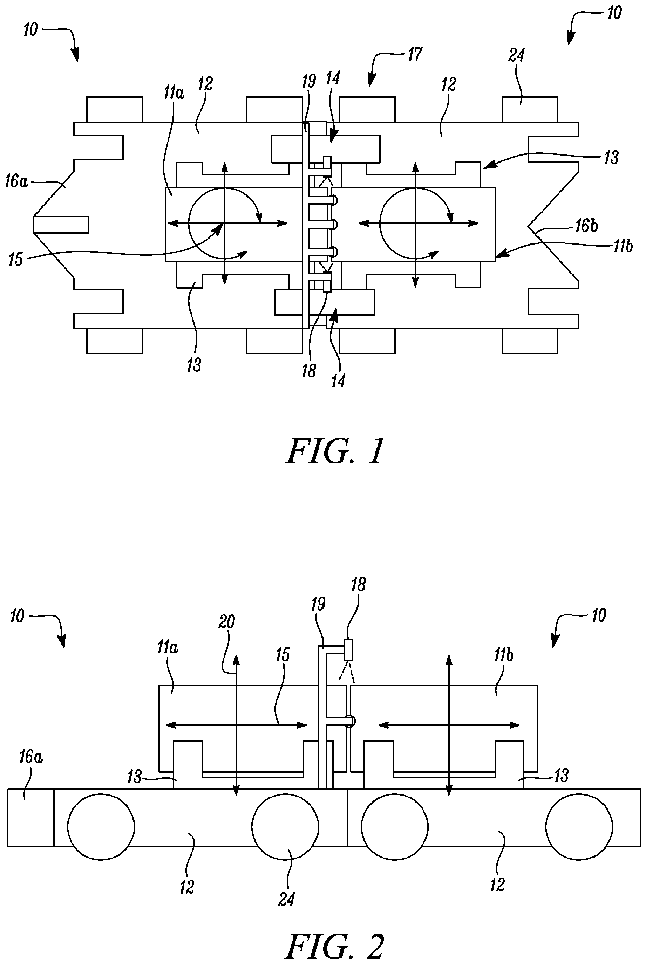

Figure 1 schematically depicts two component carriers 10. Each component carrier 10 is for holding and positioning at least one component 11 of an industrial object. For example, the industrial object may be a reactor vessel body of a reactor pressure vessel.

A reactor pressure vessel is the pressure vessel used in a nuclear power plant for containing the nuclear reactor coolant, core shroud and the reactor core. Once assembled, such a pressure vessel may be about 10 metres to 15 metres long, with an inner diameter of about 5 metres (the pressure vessel has a roughly cylindrical shape). The mass of the assembled pressure vessel may be of the order of about 500 tonnes.

The reactor vessel body can be manufactured by assembling a plurality of components 11. Each component 11 may correspond to a cylindrical segment of the reactor vessel body. The segments can be assembled by fixing the components 11 end to end. A single reactor vessel body may be formed of any number of segments, for example ranging from two to ten components 11. Hence, each component 11 may have an inner diameter of the order of about 5 metres and mass of the order of about 20-200 tonnes.

The component carrier 10 is configured for holding and positioning such a component 11. However, it is not necessary for the component 11 to be a segment of a reactor pressure vessel. The component carrier 10 can be used for holding and positioning other types of component 11, such as a part (e.g. an engine) of an aircraft. Hence, the type of component 11 and the type of industrial object is not particularly limited.

As depicted in Figure 1, the component carrier 10 comprises a mobile trolley 12. The mobile trolley 12 is configured to move, for example within a factory (or outside).

As depicted in Figure 1, the component carrier 10 further comprises a component support 13. The component support 13 is on the mobile trolley 12. This can be seen more clearly in Figure 2, which depicts the side view of the component carriers 10 depicted in Figure 1. The component support 13 is configured to hold the component 11.

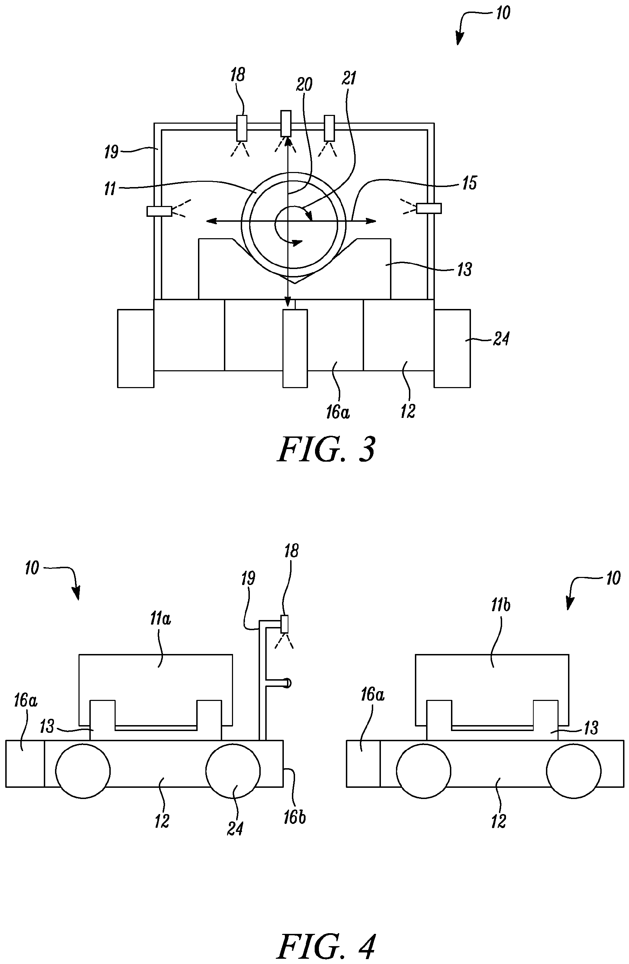

Figure 3 depicts a front view of the component carriers 10 depicted in Figures 1 and 2. As shown in Figure 3, the component support 13 may have a shape that helps it to hold the component 11. For example, as mentioned above, the component 11 may have a cylindrical shape.

As shown in Figure 3, the component support 13 may have an indentation on its upper surface for receiving the component 11. This allows the component 11 to be positioned on the component support 13 in a stable equilibrium. In the configuration shown in Figure 3, the indentation has a V-shape. However, other shapes are also possible, such as a U-shape with a rounded bottom or a U-shape with right angles.

It is not necessary for the component 11 to have a cylindrical shape. The shape of the component is not particularly limited. Accordingly, the component support 13 may be designed for holding components 11 of various shapes and sizes.

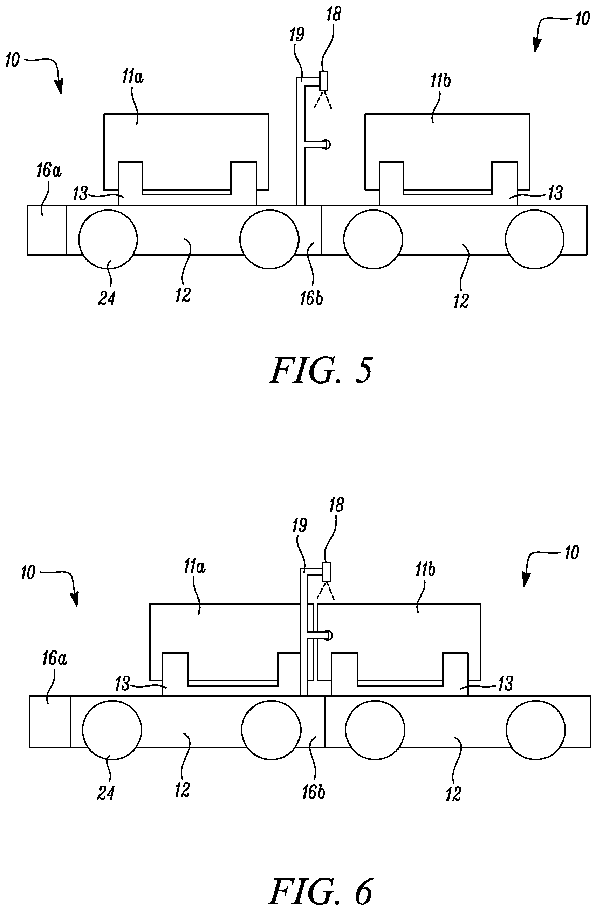

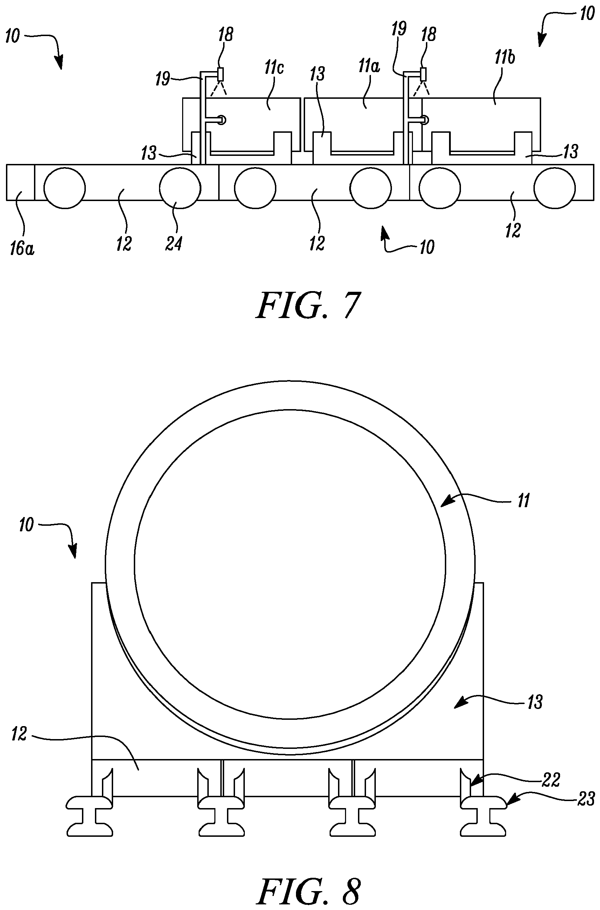

Figures 4-7 depict various stages in a method of assembling the industrial object from a plurality of components 11. The stages shown in Figures 4-7 are in chronological order. As shown in the flow of stages through Figures 4-7, the component support 13 is configured to be mobile relative to the mobile trolley 12. In particular, it can be seen that between the stages shown in Figure 5 and Figure 6 and also between the stages shown in Figure 6 and Figure 7, the component support 13 moves relative to the mobile trolley 12.

By providing that the component support 13 can move relative to the mobile trolley 12, the component carrier 10 can position the component 11 more accurately. For example, in the context of assembling a reactor vessel body, it is desirable to align components 11 relative to each other. For example, Figures 1 and 2 depict two components 11a, 11b aligned relative to each other. This facilitates assembly of the components 11 to form the reactor vessel body.

It is possible to roughly align components 11a, 11b relative to each other by controlling movements of the mobile trollies 12. Once the components 11 have been roughly aligned, the component supports 13 can move relative to the mobile trollies 12 so as to position the components 11 more accurately relative to each other.

The component carrier 10 can act as a fixture for portable manufacturing processes. This is because the component carrier 10 can align the component 11 accurately.

As shown in Figures 4-7, the movement of the component supports 13 relative to the mobile trollies 12 allows component carriers 10 to be combined so as to increase (or decrease) the effective length of the carrier. This allows the length of the carrier to be changed so as to cater for the size of the components 11 that need to be carried. In turn, this reduces the number of heavy component lifts and moves that have been previously used to move and position components of industrial objects. This also reduces the need to have high-capacity cranes in a factory, for example.

The component carrier 10 allows the movement of large pressure vessels and their associated segments during manufacture. This is an improvement on known methods that involve manual lifts. The component carrier 10 also improves process flow of manufacture of the industrial object. This is because the movement of the component support 13 relative to the mobile trolley 12 makes it quicker to position components 11 of the industrial object so that the industrial object can be manufactured more quickly.

In an arrangement, the component support 13 comprises a locking part 14. Such a locking part is shown in Figure 1. The locking part 14 is configured to lock the component support 13 relative to a corresponding component support 13 of another component carrier 10.

This is illustrated in Figure 1. The locking part 14 helps to fix components 11a, 11b held by the component supports 13 in position relative to each other.

As depicted in Figure 1, there may be a plurality of locking parts 14. For example, Figure 1 depicts two locking parts, one for either side of the component supports 13 in the width direction. The number of locking parts 14 is not particularly limited and may be one, three or more.

As mentioned above, the movement of the component support 13 relative to the mobile trolley 12 helps align the components 11a, 11b relative to each other. Once the desired alignment has been achieved, the locking part 14 is configured to lock the relative positions of the components 11a, 11b.

In an arrangement, the locking part 14 is configured to lock the component support 13 in a specific position relative to another component support 13. In this case, the act of locking the component supports 13 relative to each other using the locking part 14 automatically aligns the component supports 13 relative to each other. Provided that the components 11a, 11b are aligned to their respective components supports 13, the act of locking the component supports 13 relative to each other helps to automatically align the components 11a, 11b relative to each other.

For example, as depicted in Figure 3, the component 11 may be automatically aligned on the component support 13 because of the way that the cylindrical component 11 fits into the indentation of the component support 13. For known shapes of components 11, their alignment on the indentation of the component supports 13 is predictable. As such, the locking process can be used to help automatically align the components 11a, 11b relative to each other.

Once the locking part 14 has been used to lock the component supports 13 relative to each other, the combination of components 11a, 11b is more robust to outside influences. For example, the alignment of the components 11a, 11b is less likely to be disrupted by movement of the mobile trolley 12.

The component support 13 is an adaptable mobile fixture that holds the segments required for manufacturing the whole pressure vessel. In an arrangement, the component supports 13 are modular and inter-connectable. For example, the component supports 13 may be inter-connected using the locking part 14. In an arrangement, the locking part 14 comprises a mechanical latch. However, it is not necessary for the locking part to be a mechanical latch. Other fixing devices can be used. For example, in an alternative arrangement, the locking part 14 comprises a magnetic device. The locking part 14 facilitates the assembly of multiple pressure vessel segments, for example. This is shown in Figure 1, for example.

In an arrangement, the component support 13 comprises a fine movement positioner 15. The fine movement positioner 15 is configured to position the component support 13 relative to a corresponding component support 13 of another component carrier 10. The fine movement positioner 15 is configured to position the component support 13 so as to position components 11a, 11b held by the component supports 13 relative to each other.

In an arrangement, the fine movement positioner is configured to position the component support 13 more accurately than the position of the mobile trolley 12. In an arrangement, the fine movement positioner 15 is configured to position the component support to an accuracy of within 1 mm.

Each component support 13 contains the necessary equipment to perform fine alignment of the individual segments to the tolerances required of the manufacturing process. Typically, the tolerances required of the manufacturing process are of the order of within 100 µm. Hence, in an arrangement the fine movement positioner is configured to position the component support 13 to an accuracy of within 100 µm. However, depending on the context in which the component carrier 10 is applied, it may not be necessary for the fine movement positioner to be able to perform such accurate movements. In an arrangement, the fine movement positioner 15 is configured to position the component support 13 to an accuracy of within 500 µm, or to within 200 µm. In an arrangement, the fine movement positioner 15 is configured to position the component support 13 to greater accuracy, for example within 15 µm, within 20 µm, or within 10 µm of a target position.

The fine movement positioner 15 helps to perform alignment of the individual components 11a, 11b of the industrial object. The alignment can be performed in conjunction with metrology, i.e. measurement of the position of the component support 13 and/or the component 11 relative to another object (e.g. another component support 13 or another component 11b). In an arrangement, the component carrier 10 comprises at least one contact scanning probe and/or at least one touch probe. Additionally, or alternatively, the component carrier 10 may comprise at least one non-contact sensor.

For example, as depicted in Figures 1-7, in an arrangement the component carrier 10 comprises at least one camera 18. The camera 18 is an example of a non-contact sensor for measuring the position of the component support 13 and/or the component 11a relative to another object such as a corresponding component support 13 and/or another component 11b. For example, the camera 18 may be for monitoring the position of the component 11a held by the component support 13 relative to a corresponding component 11b held by another component support 13.

As depicted in Figures 1-7, in an arrangement the component carrier 10 comprises a camera array 19. The camera array 19 comprises a plurality of cameras 18 for monitoring the position of the component 11a held by the component support 13 from a plurality of points of view. For example, as shown in Figure 3, there may be at least one camera on either side (in the width direction) of the component 11 as well as at least one camera 18 above the component 11. The number of cameras 18 is not particularly limited. Merely as an example, Figure 3 shows five cameras 18 in total, one on either side and three at the top. However, other numbers of cameras 18 may be employed, such as two, three, four or more than five. Similarly, the number of points of view from which the cameras 18 monitor the component 11 is not particularly limited.

It is desirable for the cameras 18 to provide a good view of the point at which one component 11a joins together with another component 11b. Accordingly, as shown in Figure 3, the camera array 19 may comprise a frame that extends over the component support 13 (and over the component 11). The frame of the camera array 19 may be positioned at one end of the component carrier 10 where the component carrier 10 is intended to join up with another component carrier 10.

As depicted in Figure 3, for example, in an arrangement each camera 18 is fixed relative to the mobile trolley 12. This can be done for example by use of a frame (or other bracket). However, it is not essential for the cameras 18 to be fixed relative to the mobile trolley 12. For example, in an alternative arrangement, at least one camera 18 is fixed relative to the component support 13. It is also possible for the cameras 18 to be moveable. For example, the position of the cameras 18 on the frame of the camera array 19 could be controlled so as to help with providing a good view of the alignment between the components 11a, 11b.

As depicted in Figures 1-7, in an arrangement the component carrier 10 comprises a non-contact measurement system (e.g. the cameras 18). The non-contact measurement system is aligned at the interface of the mating components 11a, 11b.

The non-contact measurement system is configured to characterize the end profile of each component 11a, 11b. In an arrangement the non-contact measurement system comprises a positional rotary encoder. The positional rotary encoder is for monitoring the rotational angle and/or orientation of the components 11a, 11b. Optionally, the rotational angle and/or orientation of the components 11a, 11b are monitored while the components 11a, 11b are concurrently rotated and measured. For example, the components 11a, 11b can be rotated using the rotator 21 described below.

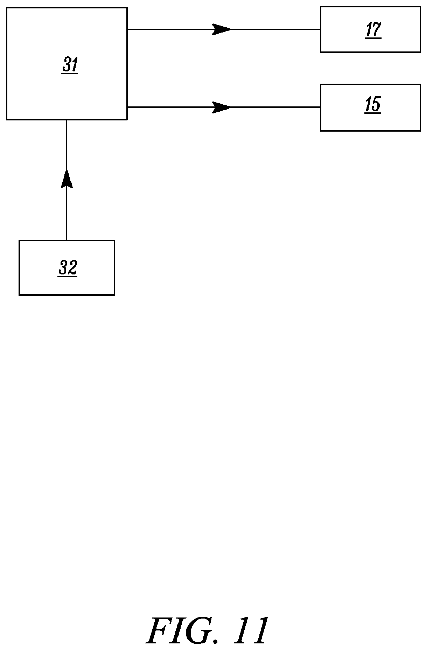

As depicted in Figure 11, in an arrangement, the component carrier 10 comprises a computer system 31. The computer system 31 is configured to perform an algorithm that takes the measurement profile information and determines the best fit orientation and alignment of the components 11a, 11b. The computer system 31 is configured to output information to the coarse movement positioner 17 described below and/or the fine movement positioner 15 described above so as to control alignment of the components 11a, 11b relative to each other. In an arrangement, the component carrier 10 comprises a feedback system 32. This feedback system 32 is configured to provide feedback during the alignment process to ensure that the mating surfaces of the components 11a, 11b are aligned as intended. For example, in an arrangement the feedback is based on the position of the components 11a, 11b as determined by the cameras 18 described below. In an arrangement, digital imaging techniques are used to improve the accuracy of alignment between the components 11a, 11b.

The computer system 31 may comprise any suitable circuitry to cause performance of the algorithm. The computer system 31 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the algorithm.

In various examples, the computer system 31 may comprise at least one processor and at least one memory. The memory stores a computer program comprising computer readable instructions that, when read by the processor, causes performance of the algorithm described herein. The computer program may be software or firmware, or may be a combination of software and firmware.

Figure 4 depicts an early stage of a method of assembling an industrial object such a pressure vessel. Figure 4 depicts two component carriers 10, each holding a component 11a, 11b of the pressure vessel.

In order to assemble the components 11a, 11b together to form the pressure vessel, the components 11a, 11b are aligned relative to each other. Initially, the alignment can be performed at a coarse level by bringing the two component carriers 10 together. This is shown by the transition from the stage shown in Figure 4 to the stage shown in Figure 5. Figure 5 shows the two component carriers 10 having been brought together.

As depicted in Figure 1, in an arrangement the mobile trolley 12 comprises an interlocking part 16. The interlocking part 16 is configured to interlock the mobile trolley 12 with a corresponding mobile trolley 12 of another component carrier 10.

For example, Figure 1 depicts a mobile trolley 12 that has a protruding interlocking part 16a configured to interlock with a complementary female interlocking part 16b of another mobile trolley 12. In an arrangement, the interlocking parts 16 of the respective mobile trollies 12 are complementary so that they are matched to fit together. The interlocking parts 16 are configured such that the mobile trollies 12 automatically align with each other when interlocking is achieved.

As depicted in Figure 1, in an arrangement each mobile trolley 12 comprises a male interlocking part 16a and a female interlocking part 16b at either end of the mobile trolley 12. This helps in increasing the length of the carrier where desired. For example, Figure 1 shows two component carriers 10 combined together by their interlocking parts 16 so as to provide an effectively double-length carrier.

As depicted in Figure 1, the interlocking parts 16 may be taper-like features. The interlocking parts 16 enable the mobile trollies 12 to locate against each other. The interlocking parts 16 provide an approximate initial alignment.

In an arrangement, the mobile trolley 12 comprises a coarse movement positioner 17. The coarse movement positioner 17 is configured to position the mobile trolley 12 relative to a corresponding mobile trolley of another component carrier 10. For example, such a coarse movement positioner 17 is used in the transition from Figure 4 to Figure 5 so as to position the two component carriers 10 relative to each other. Hence, the alignment of the two components 11a, 11b is performed at a coarse level by bringing two component carriers 10 together.

The fine alignment can then be performed with a separate system, namely the fine movement positioner 15 of the component supports 13. This is shown in the transition from the stage shown in Figure 5 to the stage shown in Figure 6. In the transition from Figure 5 to Figure 6, the component carriers 13 have both been moved relative to their respective mobile trollies 12. However, it may not be necessary for both component supports 13 to move relative to their respective mobile trollies 12. For example, it may be possible for the alignment to be achieved by moving only one of the component supports 13.

As depicted by the arrow in Figure 1 representing the fine movement positioner 15, in an arrangement the component support 13 is configured to move two-dimensionally across the mobile trolley 12. The component support 13 is configured to move in a plane parallel to the top surface of the mobile trolley 12. This allows the component support 13 to move forwards and backwards relative to the longitudinal direction of the mobile trolley 12, as indicated by the transition from Figure 5 to Figure 6, for example. The component support 13 is further configured to move in the width direction relative to the mobile trolley 12. This helps to align the component 11a relative to the component 11b more accurately than would be possible if the component support 13 were not mobile relative the mobile trolley 12.

In an arrangement, the component support 13 is configured to rotate about a vertical axis. This is indicated by the curved arrow representing the fine movement positioner 15 depicted in Figure 1. The vertical axis is substantially perpendicular to the plane of the top surface of the mobile trolley 12. By providing that the component support 13 is configured to rotate about a vertical axis, alignment between the components 11a, 11b can be improved. The component support 13 can move freely on top of the mobile trolley 12.

As represented in Figure 2, in an arrangement the component support 13 comprises a lifter 20. The lifter 20 is configured to control the vertical position of the component 11a carried by the component support 13. For example, the lifter 20 may be a lifting deck which allows the component support 13 to lift and move the component 11 where needed. The lifter 20 helps with vertical alignment between the components 11a, 11b.

In an arrangement, the component support 13 comprises a rotator 21. The rotator 21 is represented by the curved arrows shown in Figure 3, for example. The rotator 21 is configured to rotate the component 11 about a horizontal axis. The horizontal axis is parallel to the top surface of the mobile trolley 12.

In such an arrangement, each component support 13 has the ability to rotate the component 11. The component support 13 may have the ability to fully rotate the component 11. In an arrangement, the rotator 12 comprises a plurality of rollers. However, it is not essential for the rotator 21 to comprise rollers because other rotating means may also be used. The rotator 21 may be able to rotate the component 11 360° about its central axis. This may facilitate with processes such as welding, cladding, inspection and machining.

For example, once the components 11a, 11b are aligned relative to each other as shown in Figure 6, it is maybe desirable to weld the components 11a, 11b in place. By rotating the components 11a, 11b using the rotators 21 of the component supports 13, it is easier to weld the components 11a, 11b relative to each other. For example, the welding tool does not have to be moved as much as would otherwise be the case. However, it is not essential for the rotator 21 to be provided. For example, it would be possible to perform the welding operation by moving the welding tool around the circumference of the joint between the components 11a, 11b.

The component carrier 10 can be used in a situation of bringing the machine to the parts, rather than the part to the machine. In an arrangement, multiple manufacturing operations are conducted with the component 11 held by the same component support 13. The component support 13 and its respective component 11 can remain combined with each other until the entire industrial object is complete (i.e. fully assembled). Once the industrial object, such as the reactor pressure vessel has been assembled, a single crane lift can be performed for despatch. This is a reduction in the number of crane lifts previously required.

It may be that the equipment used to perform the manufacturing operations is modified or designed to accommodate the component supports 13. This allows the components 11 to remain held by the component supports 13 throughout the manufacturing operations.

Once the components 11a, 11b have been welded relative to each other, a further component 11c can be added. This is shown by the transition from Figure 6 to Figure 7. Figure 7 shows that a further component carrier 10 with a corresponding component support 13 carries the further component 11c. The mobile trolley 12 of the third component carrier 12 mates with the middle component carrier 10 through the interlocking parts 16. This provides an initial approximate alignment. The component support 13 then performs fine alignment.

As depicted in Figure 7, in an arrangement the component support 13 is configured to be able to move off the mobile trolley 12 and onto a corresponding mobile trolley 12 of anther component carrier 10. The component support 13 can separate from the mobile trolley 12. This then leaves the left-most mobile trolley 12 shown in Figure 7 unused. The unused mobile trolley 12 can then be released (and hence used for another process).

The component carrier 10 comprises interlocking features for aligning and coupling mobile trollies 12 together. A sensor arrangement such as the cameras 18 is configured to measure the distance between the components 11 (e.g. work pieces) and their alignment. In an arrangement, the sensor arrangement is mounted on a frame that surrounds the components 11. The component support 13 may also be called a shell support. The component support 13 is moveable relative to the mobile trolley 12. This allows the components 11 to be brought together more accurately than as previously possible.

In an arrangement, the mobile trolley 12 has a width of at least 2 metres, optionally at least 4 metres, optionally at least 5 metres. In an arrangement, the mobile trolley 12 has a width of at most 20 metres, optionally at most 10 metres, and optionally at most 5 metres. In an arrangement, the mobile trolley 12 has a width of approximately 4 metres.

In an arrangement, the component support 13 has a width of at least 1 metre, optionally at least 2 metres and optionally at least 4 metres. In an arrangement, the component support 13 has a width of at most 10 metres, and optionally at most 5 metres.

In an arrangement, the component carriers 10 are configured such that mobile trollies 12 can be locked side by side. Additionally, as shown in Figure 7, for example, the mobile trollies 12 can be locked in front of each other.

As depicted in Figure 8, in an arrangement the mobile trolley 12 comprises wheels 22 configured to run on complementary rails 23. The rails 23 may be positioned in the floor of a factory, for example. In an arrangement, the rails 25 have a standard gauge. As depicted in Figure 8, in an arrangement two sets of rails 23 are provided next to each other for the mobile trolley 12 to run on. However, it is not necessary for two sets of rails 23 to be provided. For example, a single set of rails 23 could be provided. Similarly, it is not necessary for the rails 23 to be of a standard gauge. The gauge of the rails 23 could be customised depending on the width of the mobile trolley 12.

As depicted in Figures 1-7, in an arrangement the component carrier 10 comprise wheels 24 and a complementary steering system. The wheels 24 may be omnidirectional wheels configured to move the mobile trolley 12.

As explained above, the mobile trolley 12 may comprise wheels 22 configured to run on complementary rails 23 or wheels 24 and a complementary steering system. In the same way, in an arrangement, the component support 13 may comprise wheels and a complementary steering system.

In an arrangement, the component support 13 moves relative to the mobile trolley 12 using an encoded linear guide rail. This allows the axial position to be accurately controlled, while having low friction. In an alternative arrangement, the component support 13 moves relative to the mobile trolley 12 using linear magnetic rails.

In an arrangement, the mating mobile trollies 12 can be pulled together by using one or more of hydraulic locks and leadscrews. Other fixing devices may also be used.

In an arrangement, the component carrier 10 comprises T-grooved machine slots. For example, T-grooved machine slots could be used with appropriate clamping to hold the component 11 to the component carrier 13 and/or to the mobile trolley 12 in a static manner, particularly if the component 11 does not need fine alignment or rotation.

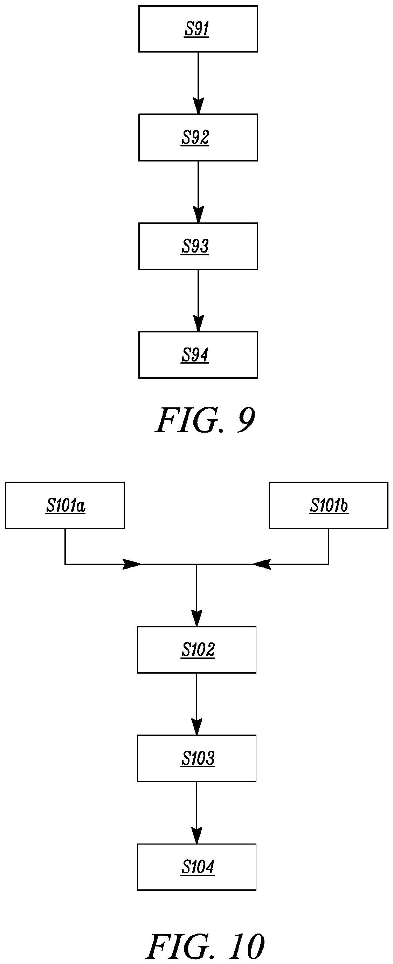

As illustrated in Figure 9, in an arrangement, the component carrier 10 is used to position the component 11 so that a process can be performed on the component 11. In step S91, the method comprises holding the component 11 by a component support 13 on a mobile trolley 12. In step S92, the method comprises coarsely positioning the component by controlling movement of the trolley 12. In step S93, the method comprises finely positioning the component 11 by controlling movement of the component support 13 relative to the trolley 12. In step S94, the method comprises performing the process on the component 11.

As illustrated in Figure 10, in an arrangement, an industrial object can be assembled by positioning the components 11a, 11b relative to each other by controlling movements of the component carriers 10, and then assembling the components 11a, 11b together. In step S101a, the method comprises holding a first component 11a of the industrial object by a first component support 13 on a first mobile trolley 12. In step S101b, the method comprises holding a second component 11b of the industrial object by a second component support 13 on a second mobile trolley 12. In step S102, the method comprises coarsely positioning the components 11 relative to each other by controlling movements of the trolleys 12. In step S103, the method comprises finely positioning the components 11 relative to each other by controlling movements of the component supports 13 relative to the trolleys 12. In step S104, the method comprises assembling the components 11 together.

Creating a manufacturing process in this way allows an increase of process flow. There is less need to stop the process while lifts are planned, cranes brought to the parts or machines made ready to accept to the parts. Having component supports 13 created in this way and designed specifically for a range of pressure vessel segments, for example, allows manufacturing processes to be specially tailored for manufacturing rate and process flow. This can save time in the manufacturing process and allow more components 11 to be put through a given factory volume than was previously possible.

Although the description above focuses on reactor pressure vessels, the component carrier 10 could be used to hold and position other components 11 that require assembly such as aero-engines or jet aircraft fuselages. The component carrier 10 could also be applied to other large factory built components that are composed of a number of large sections that require assembly.

## Claims

1. A component carrier (10) for holding and positioning at least one component (11) of an industrial object, the carrier (10) comprising:
a mobile trolley (12); and
a component support (13) on the trolley (12) and configured to hold the component (11);
wherein the component support (13) is configured to be mobile relative to the trolley (12).

2. The carrier (10) of claim 1, wherein the component support (13) comprises a locking part (14) configured to lock the component support (13) relative to a corresponding component support of another component carrier of claim 1, so as to fix components (11) held by the component supports (13) in position relative to each other.

3. The carrier (10) of any preceding claim, wherein the component support (13) comprises a fine movement positioner (15) configured to position the component support (13) to an accuracy of within 1mm relative to a corresponding component support of another component carrier of claim 1, so as to position components (11) held by the component supports (13) relative to each other.

4. The carrier (10) of any preceding claim, wherein the trolley (12) comprises an interlocking part (16) configured to interlock the trolley (12) with a corresponding mobile trolley of another component carrier of claim 1.

5. The carrier (10) of any preceding claim, wherein the trolley (12) comprises a coarse movement positioner (17) configured to position the trolley (12) relative to a corresponding mobile trolley of another component carrier of claim 1.

6. The carrier (10) of any preceding claim, comprising at least one camera (18) for monitoring the position of the component (11) held by the component support (13) relative to a corresponding component held by another component support.

7. The carrier (10) of claim 6, comprising a camera array (19) comprising a plurality of cameras (18) for monitoring the position of the component (11) held by the component support (13) from a plurality of points of view.

8. The carrier (10) of claim 6 or 7, wherein each camera (18) is fixed relative to the trolley (12).

9. The carrier (10) of any preceding claim, wherein the component support (13) is configured to move two-dimensionally across the trolley (12).

10. The carrier (10) of any preceding claim, wherein the component support (13) is configured to rotate about a vertical axis.

11. The carrier (10) of any preceding claim, wherein the component support (13) comprises a lifter (20) configured to control the vertical position of the component (11).

12. The carrier (10) of any preceding claim, wherein the component support (13) comprises a rotator (21) configured to rotate the component (11) about a horizontal axis.

13. The carrier (10) of any preceding claim, wherein the component support (13) is configured to move off the trolley (12) and onto a corresponding trolley of another component carrier of claim 1.

14. A method of performing a process on a component (11) of an industrial object, the method comprising:
holding (S91) the component (11) by a component support (13) on a mobile trolley (12);
coarsely positioning (S92) the component by controlling movement of the trolley (12);
finely positioning (S93) the component (11) by controlling movement of the component support (13) relative to the trolley (12); and
performing (S94) the process on the component (11).

15. A system for controlling positioning of at least one component (11) of an industrial object, the system comprising:
a computer system (31) configured to output control signals to at least one of a coarse movement positioner (17) and a fine movement positioner (15) of a component carrier (10) for holding and positioning the component (11); and
a feedback system (32) configured to output feedback signals to the computer system (31) indicating the position of the component (11);
wherein the computer system (31) is configured to output the control signals taking into account the feedback signals.
